# EUROPÄISCHE PATENTSCHRIFT

(11) **EP 1 310 132 B1**
(45) Veröffentlichungstag und Bekanntmachung des Hinweises auf die Patenterteilung: **12.12.2007**
(21) Anmeldenummer: 01964877.3
(22) Anmeldetag: 09.08.2001
(51) Int. Cl.: H04Q 7/38

(54) **VERFAHREN ZUM VEREINFACHTEN AUSTAUSCH EINER SIM-KARTE BEI TEILNEHMERN EINES DIGITALEN MOBILKOMMUNIKATIONSNETZES**
METHOD FOR SIMPLIFYING THE EXCHANGE OF A SIM CARD OF SUBSCRIBERS OF A DIGITAL MOBILE COMMUNICATIONS NETWORK
PROCEDE D'ECHANGE SIMPLIFIE D'UNE CARTE SIM D'ABONNES A UN RESEAU NUMERIQUE DE TELECOMMUNICATION MOBILE

(30) Priorität: 10.08.2000 DE 10039861
(43) Veröffentlichungstag der Anmeldung: 14.05.2003
(73) Patentinhaber: DeTeMobil Deutsche Telekom MobilNet GmbH, 53227 Bonn (DE)
(72) Erfinder: REEMTSMA, Jan-Hinnerk, 53173 Bonn (DE)
(74) Vertreter: Riebling, Peter
(86) Internationale Anmeldenummer: PCT/DE2001/002953
(87) Internationale Veröffentlichungsnummer: WO 2002/013564

(56) Entgegenhaltungen:
- WO-A-97/01253
- WO-A-99/01848
- WO-A-99/27730
- DE-A- 19 801 576
- GB-A- 2 304 257
- US-A- 5 657 373

## Beschreibung

Die Erfindung betrifft ein Verfahren zum vereinfachten Austausch einer SIM-Karte bei Teilnehmern eines digitalen Mobilkommunikationsnetzes nach dem Oberbegriff des Anspruchs 1.

Bei der Einführung neuer Mobilfunkprodukte und Mobilfunkdienste durch einen Mobilfunkprovider ist es häufig hilfreich oder sogar erforderlich, das Subscriber-Identy-Modul (SIM-Karte) bei Bestandskunden zu erneuern. Bei einem Kundenstamm von mehreren Millionen Teilnehmern ist dies ein erhebliches logistisches Problem, da gewährleistet werden muss, dass jeder Teilnehmer seine personalisierte SIM-Karte erhält und nur eine Karte je Teilnehmer, d.h. entweder die "alte" oder die "neue" aktiv geschaltet ist.

Bis heute ist kein Verfahren bekannt, das einen einfachen Austausch der SIM-Karte bei in Mobilkommunikationsnetzen erlaubt. Um Missbrauch zu verhindern ist es nötig, dass der Kunde seine neue Karte entweder beim Mobilfunkprovider persönlich abholt bzw. die alte gegen die neue Karte eintauscht oder nach postalischem Empfang der Karte den Empfang schriftlich bestätigt. Danach kann die alte Karte deaktiviert und die neue aktiviert werden. Im Gegensatz zu Bank-Karten muss auf jeden Fall verhindert werden, dass beide Karten gleichzeitig im Mobilkommunikationsnetz aktiv sind. Der bisherige Prozess ist manuell und aufgrund der entstehenden Kosten untauglich für die massenhafte Migration von Bestandskunden.

Das als nächstliegender Stand der Technik angesehene Dokument WO 97 01253 A1 offenbart bereits ein Verfahren zum Austausch einer SIM-Karte bei Teilnehmern eines digitalen Mobilkommunikationsnetzes, wobei der Teilnehmer über eine alte, aktive und eine neue, inaktive SIM-Karte zum Betrieb in einem Mobilendgerät verfügt, wobei das ordnungsgemäße Aktivieren der neuen SIM-Karte und Deaktivieren der alten SIM-Karte im Dialog mit dem Teilnehmer durch ein Zusammenwirken mehreren Einrichtungen des Mobilkommunikationsnetzes, wie Heimatregister (HLR), Kundendienstzentrum und Authentifikationszentrum vorgenommen wird. Die SIM-Karten werden vom System durch einen individuellen Identifizierungscode erkannt.

Die US 5 657 373 A offenbart ein Verfahren zur wahlweisen Verwendung von mehreren SIM-Karten durch einen Teilnehmer, wobei wenn eine SIM-Karte temporär aktiviert ist, die anderen automatisch deaktiviert werden. Eine dauerhafte Deaktivierung einer "alten" SIM-Karte ist nicht vorgesehen.

In der WO 99 27730 A1 ist ein Verfahren und Informationssystem zur Übertragung von Informationen auf Identifikationskarten, beispielsweise SIM-Karten, bekannt, bei dem in einem Backup/Restore Vorgang auf einer alten SIM-Karte vorhandene kundenspezifische Informationen auf eine neue SIM-Karte übertragen werden.

Die Aufgabe der Erfindung besteht darin, ein Verfahren zum vereinfachten Austausch einer SIM-Karte bei Teilnehmern eines digitalen Mobilkommunikationsnetzes vorzuschlagen, welches sowohl für den Netzbetreiber als auch den Teilnehmer einen minimalen logistischen Aufwand erfordert.

Diese Aufgabe wird erfindungsgemäß durch die Merkmale des Patentanspruchs 1 gelöst.

Erfindungsgemäß ist vorgesehen, dass das ordnungsgemäße Aktivieren der neuen SIM-Karte und Deaktivieren der alten SIM-Karte im Dialog mit dem Teilnehmer durch einen an das Mobilkommunikationsnetz angebundenen Migrationsserver vorgenommen wird, wobei ein Senden einer Nachricht mit vorgegebenem Inhalt vom Mobilendgerät an den Migrationsserver unter Verwendung der alten SIM-Karte erfolgt; ein Aktivieren der neuen SIM-Karte durch den Migrationsserver; eine Benachrichtigung des Teilnehmers, vorzugsweise über das Mobilendgerät, dass die neue SIM-Karte gegen die alte getauscht werden kann; ein Austausch der SIM-Karte im Mobilendgerät durch den Teilnehmer; und ein Deaktivieren der alten SIM-Karte durch den Migrationsserver, sobald sich der Teilnehmer erstmals mit der neuen SIM-Karte in das Mobilkommunikationsnetz einbucht.

Die Vorteile des erfindungsgemäßen Verfahrens liegen auf der Hand.
- Es handelt sich um einen automatisierten Prozess
- Ein Missbrauch der SIM-Karten ist praktisch ausgeschlossen
- Teilnehmer kann selbst bestimmen, wann auf die neue Karte umgeschaltet wird
- Eine Massenmarkt-Migration wird möglich
- Das Verfahren ist aus Teilnehmersicht einfach, d.h. es ist wenig Kundenbetreuung zu erwarten
- Es ist eine "gleitende" Migration ist möglich, das bedeutet Spitzenbelastungen im Netz und der Kundenadministration können vermieden werden.
- Die vorgeschlagene Server-Lösung ist skalierbar
- Die vorgeschlagene Server-Lösung minimiert Aufwand im Netz

Um sicherzugehen, dass der Teilnehmer seine auf ihn personalisierte neue SIM-Karte erhalten hat, muss er den Erhalt der neuen SIM-Karte zweifelsfrei bestätigen. Erst dann wird die neue SIM-Karte aktiviert.

Vorzugsweise erfolgt der Nachrichtenaustausch zwischen Mobilendgerät und Migrationsserver mittels Kurznachrichten (SMS). Es können jedoch auch andere Verfahren wie z.B. E-Mail, Spracheingabe etc. verwendet werden.

Ein weiterer Vorteil der Erfindung ist, dass der Austausch der SIM-Karten zu einem vom Teilnehmer frei wählbaren Zeitpunkt erfolgen kann. Erst nach dem Austausch der SIM-Karten und dem erstmaligen Einbuchen ins Mobilkommunikationsnetz wird die alte Karte deaktiviert.

Ferner kann vorgesehen sein, dass der Migrationsserver auf der alten SIM-Karte vorhandene persönliche Daten des Teilnehmers abfragt, zwischenspeichert und beim erstmaligen Einbuchen mit der neuen SIM-Karte auf diese überträgt. Bei diesen persönlichen Daten kann es sich z.B. um das elektronische Telefonbuch des Teilnehmers handeln.

Vorzugsweise beim erstmaligen Einbuchen mit der neuen SIM-Karte kann der Teilnehmer über sein Endgerät informiert werden, wie mit der alten SIM-Karte zu verfahren ist.

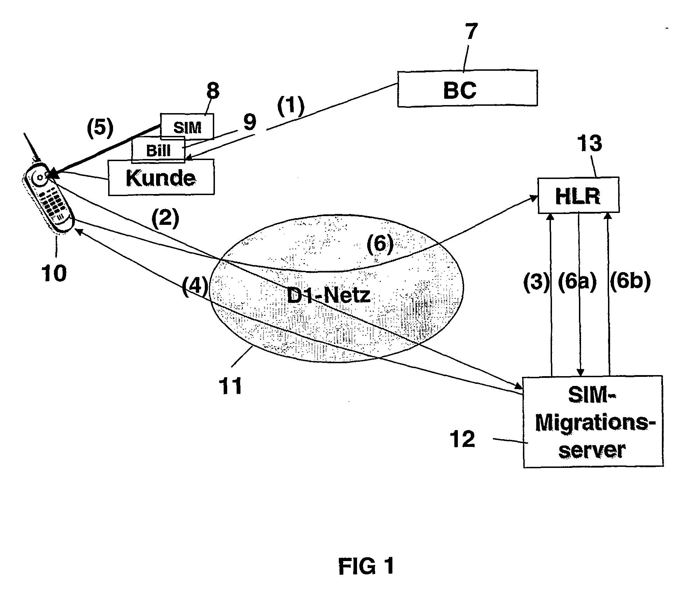

Anhand nachfolgender Zeichnungsfigur 1 wird das erfindungsgemäße Verfahren und die Aufgaben des SIM-Karten-Migrationsservers genauer erklärt. Aus der Zeichnung und ihrer Beschreibung ergeben sich weitere Merkmale und Vorteile der Erfindung.

### Verfahrensschritt 1:

Die neue bereits personalisierte aber noch nicht im Mobilkommunikationsnetz 11 frei geschaltete SIM-Karte 8 wird dem Teilnehmer 10 z.B. zusammen mit der Monatsrechnung 9 durch das Billing-Center (Verrechnungszentrale) 7 zugestellt. Mit gleicher Post erhält der Teilnehmer 10 detaillierte Informationen über die zusätzlichen Features, die ihm durch seine neue SIM-Karte 8 zugänglich sind. Ferner wird ihm mitgeteilt, dass er den Erhalt der SIM-Karte 8 mittels z.B. einer SMS zu einem frei wählbaren Zeitpunkt bestätigen muss.

### Verfahrensschritt 2:

Der Teilnehmer 10 sendet mit seiner alten, im Endgerät vorhandenen SIM-Karte eine SMS o.ä. mit vorgegebenem Inhalt, z.B. "Quittung Erhalt SIM", an den an das Mobilkommunikationsnetz 11 angebundenen SIM-Karten Migrationsserver 12.

### Verfahrensschritt 3:

Der SIM-Karten-Migrationsserver 12 aktiviert die neue SIM-Karte 8 im Netz 11, d.h. die neue SIM-Karte wird freigeschaltet und dadurch beim Einbuchen vom Mobilkommunikationsnetz erkannt und akzeptiert. Optional kann der Migrationsserver 12 jetzt auch vom Teilnehmer10 auf der alten Karte gespeicherte Daten wie das Telefonbuch abfragen und speichern.

Der SIM-Karten-Migrationsserver 12 teilt dem Teilnehmer mit, dass er ab jetzt die SIM-Karte 8 tauschen kann.

### Verfahrenschritt 5:

Der Teilnehmer 10 tauscht die SIM-Karte 8 in seinem Endgerät aus.

### Verfahrenschritt 6:

Sobald sich der Teilnehmer 10 das erste Mal mit seiner neuen SIM-Karte 8 ins Netz 11 einbucht, informiert das HLR 13 den SIM-Karten-Migrationsserver 12 (Schritt 6a), der daraufhin die alte SIM-Karte deaktiviert (Schritt 6b).

Optional kann die Benachrichtigung des Servers 12 auch vom Endgerät 10 beispielsweise über eine SIM-Toolkit-Applikation erfolgen.

Sofern im Schritt 3) die vom Teilnehmer 10 auf der alten SIM-Karte abgespeicherten persönlichen Daten gesichert wurden, können diese jetzt auf die neue SIM-Karte 8 übertragen werden. Ferner kann der Teilnehmer jetzt noch einmal darüber informiert werden wie mit der alten Karte zu verfahren ist.

### Zeichnungslegende

- 1: Verfahrensschritt
- 2: Verfahrensschritt
- 3: Verfahrensschritt
- 4: Verfahrensschritt
- 5: Verfahrensschritt
- 6: Verfahrensschritt, 6a, 6b
- 7: Billing-Center (BC)
- 8: SIM-Karte
- 9: Rechnung
- 10: Teilnehmer (Endgerät)
- 11: Mobilkommunikationsnetz
- 12: SIM-Migrationsserver
- 13: Heimatdatenbank (HLR)

## Patentansprüche

1. Verfahren zum vereinfachten Austausch einer SIM-Karte bei Teilnehmern eines digitalen Mobilkommunikationsnetzes, wobei der Teilnehmer über eine alte, aktive SIM-Karte und eine neue, inaktive SIM-Karte zum Betrieb in einem Mobilendgerät verfügt, wobei das ordnungsgemäße Aktivieren der neuen SIM-Karte (8) und Deaktivieren der alten SIM-Karte im Dialog mit dem Teilnehmer (10) durch einen an das Mobilkommunikationsnetz (11) angebundenen Migrationsserver (12) vorgenommen wird,
**gekennzeichnet durch** die Schritte:
Senden einer Nachricht mit vorgegebenem Inhalt vom Mobilendgerät (10) an den Migrationsserver (12) unter Verwendung der alten SIM-Karte;
Aktivieren der neuen SIM-Karte (8) **durch** den Migrationsserver (12);
Benachrichtigung des Teilnehmers (10), dass die neue SIM-Karte (8) gegen die alte getauscht werden kann;
Austausch der SIM-Karte (8) im Mobilendgerät; und
Deaktivieren der alten SIM-Karte **durch** den Migrationsserver (12), sobald sich der Teilnehmer erstmals mit der neuen SIM-Karte (8) in das Mobilkommunikationsnetz (11) einbucht.

2. Verfahren nach Anspruch 1, **dadurch gekennzeichnet, dass** die neue SIM-Karte (8) erst aktiviert wird, wenn deren Erhalt anhand der vom Teilnehmer übermittelten Nachricht zweifelsfrei bestätigt wird.

3. Verfahren nach einem oder mehreren der vorhergehenden Ansprüche, **dadurch gekennzeichnet, dass** die Nachricht eine SMS- oder e-mail-Nachricht ist.

4. Verfahren nach einem oder mehreren der vorhergehenden Ansprüche, **dadurch gekennzeichnet, dass** der Migrationsserver (12) auf der alten SIM-Karte vorhandene persönliche Daten des Teilnehmers abfragt, zwischenspeichert und beim erstmaligen Einbuchen mit der neuen SIM-Karte (8) auf diese überträgt.

## Claims

1. Method for the simplified exchange of a SIM card for subscribers to a digital mobile communications network, the subscriber having an old, active SIM card and a new, inactive SIM card for operation in a mobile terminal, proper activation of the new SIM card (8) and deactivation of the old SIM card being performed in dialogue with the subscriber (10) by a migration server (12) linked to the mobile communications network (11),
**characterised by** the steps of:
sending a message of given content from the mobile terminal (10) to the migration server (12) using the old SIM card;
activation of the new SIM card (8) by the migration server (12);
notification of the subscriber (10) that the new SIM card (8) can be exchanged for the old one;
exchange of the SIM card (8) in the mobile terminal; and
deactivation of the old SIM card by the migration server (12) as soon as the subscriber first logs on to the mobile communications network (11) with the new SIM card (8).

2. Method according to claim 1, **characterised in that** the new SIM card (8) is not activated until its content is confirmed beyond doubt with the aid of the message transmitted by the subscriber.

3. Method according to one or more of the preceding claims, **characterised in that** the message is an SMS or e-mail message.

4. Method according to one or more of the preceding claims, **characterised in that** the migration server (12) scans the subscriber's personal data present on the old SIM card, buffers them and, when the subscriber first logs on with the new SIM card (8), transfers them to the latter.

## Revendications

1. Procédé d'échange simplifié d'une carte SIM pour les abonnés d'un réseau de communication mobile numérique, selon lequel l'abonné dispose d'une ancienne carte SIM active et d'une nouvelle carte SIM inactive à utiliser dans un terminal mobile, et l'activation réglementaire de la nouvelle carte SIM (8) et la désactivation réglementaire de l'ancienne carte SIM sont réalisées en mode dialogué avec l'abonné (10) grâce à un serveur de migration (12) relié au réseau de communication mobile (11),
**caractérisé par** les étapes suivantes :
- un message avec un contenu prédéfini est envoyé par le terminal (10) au serveur de migration (12) à l'aide de l'ancienne carte SIM ;
- la nouvelle carte SIM (8) est activée par le serveur de migration (12) ;
- l'abonné (10) est avisé que la nouvelle carte SIM (8) peut être échangée contre l'ancienne ;
- la carte SIM (8) est changée dans le terminal mobile ; et
- l'ancienne carte SIM est désactivée par le serveur de migration (12) dès que l'abonné se connecte pour la première fois avec la nouvelle carte SIM (8) au réseau de communication mobile (11).

2. Procédé selon la revendication 1, **caractérisé en ce que** la nouvelle carte SIM (8) n'est activée que lorsque sa réception est confirmée sans aucun doute à l'aide du message transmis par l'abonné.

3. Procédé selon l'une au moins des revendications précédentes, **caractérisé en ce que** le message est un message par SMS ou par courrier électronique.

4. Procédé selon l'une au moins des revendications précédentes, **caractérisé en ce que** le serveur de migration (12) interroge les données personnelles de l'abonné qui se trouvent sur l'ancienne carte SIM, il les stocke temporairement et il les transmet à la nouvelle carte SIM (8) lors de la première connexion à l'aide de celle-ci.
